# EUROPEAN PATENT SPECIFICATION

(11) **EP 1 758 489 B1**
(45) Date of publication and mention of the grant of the patent: **12.03.2008**
(21) Application number: 05747625.1
(22) Date of filing: 16.06.2005
(51) Int. Cl.: A47J 31/18, A47J 31/44

(54) **A COFFEE MACHINE**
KAFFEEMASCHINE
MACHINE A CAFE

(30) Priority: 25.06.2004 TR 200401540
(43) Date of publication of application: 07.03.2007
(73) Proprietor: Arçelik Anonim Sirketi, 34950 Istanbul (TR)
(72) Inventor: SIMSIR, Bogac Arçelik Anonim Sirketi, 34950 Istanbul (TR)
(86) International application number: PCT/IB2005/051985
(87) International publication number: WO 2006/000960

(56) References cited:
- WO-A-20/04069013
- CH-A- 538 848
- GB-A- 1 080 495

## Description

This invention relates to a coffee machine, preferably suitable for preparing Turkish coffee.

In automatic machines used for preparing such hot beverages as tea or coffee, as a result of a temperature and pressure increase in the containers utilized for cooking, brewing or warm keeping purposes, overflowing incidents may occur and overflow fluids may damage metal parts or electrical connections of the machine. In addition to that, overflow liquids may cause problems concerning cleanliness of the places where the machine is used. In automatic machines used to prepare hot beverages, several methods are employed in order to prevent overflows or to collect overflow liquids. Particularly, Turkish coffee prepared in automatic machines, may easily overflow from the pot in which it is cooked due to its fast foaming property during cooking and thereby may damage the coffee machine.

In the United States Patent Document US 5832809, a description is given of a cap used in automatic coffee makers, in order to prevent pressure increase and overflow.

In the United States Patent Document US 6123010, a description is given of an overflow container, positioned below the container where coffee is heated where overflow liquids are collected.

In the International Patent Application WO 02060305, a description is given of shield extensions that prevent overflow, horizontally extending along the circumference at inner edges of the spout of the coffee preparation container.
Document CH-A-538848 discloses a coffee machine according to the preamble of independent claim 1.

The aim of the present invention is the realization of a coffee machine wherein means are provided to prevent the electrical connections from getting damaged by liquids dripping as a result of overflow or washing.

The coffee machine realized in order to attain above mentioned aim of the present invention is illustrated in the attached figures where:

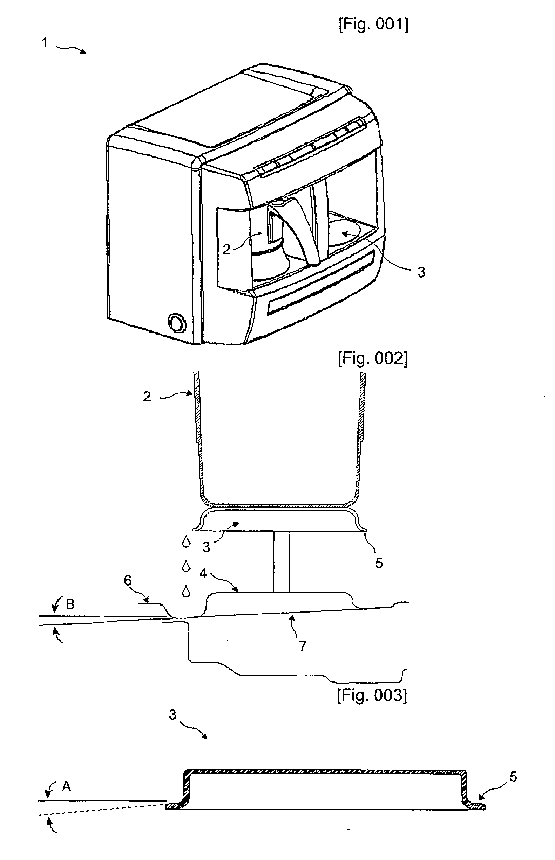

Fig.1 - is a perspective view of a coffee machine.

Fig.2 - is a schematic representation of a cooking chamber, a heater and a heater group.

Fig.3 - is a sectional view of a heater.

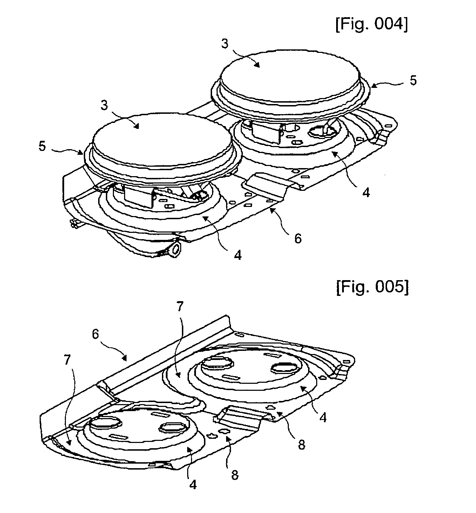

Fig.4 - is a perspective view of a carrying tray with heaters positioned on it.

Fig.5 - is a perspective view of a carrying tray.

The elements shown in figures are numbered individually as follows:
1. Coffee machine
2. Cooking chamber
3. Heater tray
4. Heater group
5. Circular edge
6. Carrying tray
7. Drain
8. Discharge hole

The coffee machine (1) comprises a cooking chamber (2) where cooking process is performed, a heater tray (3) whereby heat is transferred to the cooking chamber (2), a heater group (4) where electrical and mechanical connections of the heater tray (3) are located and which is positioned under the heater tray (3) and, a carrying tray (6) where the heater group (4) is mounted on.

The heater tray (3) incorporates a surrounding circular edge (5) that prevents liquids from reaching the heater group (4), on which liquids drip as a result of an overflow or as the cooking chamber (2) is placed back to the coffee machine (1) after being washed.

The circular edge (5) is like an extension surrounding the heater tray (3) that is preferably circular and, it may be manufactured as a single piece with the heater tray (3) or as a separate piece to be mounted onto the heater tray (3) later.

The projection of the periphery of the circular edge (5) on the carrying tray (6) is such to cover the heater group (4). Thereby, it is ensured that liquids dripping from the edge of the circular edge (5) fall outside the section where the heater group (4) is located.

The upper surface of the circular edge (5) is inclined with respect to the horizontal plane and thus, liquids coming from the heater tray (3) are prevented from accumulating on the circular edge (5), ensuring that they flow away.

The carrying tray (6) incorporates a drain (7) which is inclined with respect to the horizontal plane and whereby liquids that drip outside the heater group (4) by means of the circular edge (5) are routed to flow outside and, one or more than one discharge hole (8) whereby liquids flowing in the drain (7) are discharged to the outside of the coffee machine (1) or to a separate compartment inside the coffee machine (1) which is suitable to collect overflow liquids.

In the coffee machine (1), the object of the present invention, several precautions are taken to ensure that water dripping as the cooking chamber (2) is placed back to the coffee machine (1) after being washed for cleaning purposes or liquids overflowing from the cooking chamber (2) during cooking procedure, do not damage the coffee machine (1) and the environment. Liquids overflowing from the cooking chamber (2) or dripping, reach the heater tray (3) first and then, by passing on the circular edge (5) they drip onto the carrying tray (6). Because the upper surface of the circular edge (5) is inclined at an angle A, it is achieved that liquids do not accumulate on the circular edge (5). Since the heater tray (3) is positioned above the heater group (4) and since the outer diameter of the circular edge (5) is larger than the outer diameter of the heater group (4), dripping liquids fall into the drain (7) located outside the section where the heater group (4) is placed. Liquids, that continue to flow as a result of the fact that the drain (7) is inclined at an angle B with respect to the horizontal plane, are able to reach discharge holes (8) in order to be discharged to the outside of the coffee machine (1) or to a compartment inside the coffee machine (1) which is suitable to collect overflow liquids.

When the cooking chamber (2) is placed back to the coffee machine (1) after being cleaned by washing and without being dried or when an overflow occurs during a cooking process, by means of the drain (7) positioned at the circular edge (5) and the carrying tray (6), it is prevented that liquids reach the heater group (4) and cause damage by dripping on the cables of the heater group (4).

In the coffee machine (1), the object of the present invention, safe and clean conditions of use are provided by applying the mentioned solutions concerning the dripping and overflow problems.

## Claims

1. - A coffee machine (1) comprising a cooking chamber (2) where cooking process is performed, a heater tray (3) whereby heat is transferred to the cooking chamber (2) and a heater group (4) where electrical and mechanical connections of the heater tray (3) are located and which is positioned under the heater tray (3), wherein the heater tray (3) comprises a circular edge (5) surrounding it, which (5) prevents liquids that drip on it from reaching the heater group (4), **characterized by** a carrying tray (6) on which the heater group (4) is mounted and which comprises a drain (7) that is inclined with respect to the horizontal plane and whereby dripping liquids are routed to flow outside.

2. - A coffee machine (1) as described in Claim 1, **characterized by** the heater tray (3) which comprises the circular edge (5) that is like an extension surrounding it and manufactured as a single piece with the heater tray (3).

3. - A coffee machine (1) as described in Claim 1, **characterized by** the-heater tray (3) which comprises the circular edge (5) as the projection of the periphery of which, on the carrying tray (6), is so as to cover the heater group (4) wherein liquids dripping from the circular edge (5), fall outside the section where the heater group (4) is located.

4. - A coffee machine (1) as described in Claim 2, **characterized by** the heater tray (3) which comprises the circular edge (5) with the upper surface of which is inclined with respect to the horizontal plane.

5. - A coffee machine (1) as described in Claim 1, **characterized by** the carrying tray (6) which comprises a discharge hole (8) whereby liquids flowing in the drain (7) are discharged to the outside or inside of the coffee machine (1).

## Patentansprüche

1. Kaffeemaschine (1), umfassend eine Brühkammer (2), in der der Brühvorgang durchgeführt wird, eine Wärmplatte (3), mit der Wärme an die Brühkammer (2) übertragen wird, und eine Erwärmungsgruppe (4), an der elektrische und mechanische Verbindungen der Wärmplatte (3) angeordnet sind, und die unter der Wärmplatte (3) positioniert ist, wobei die Wärmplatte (3) eine kreisförmige Kante (5) umfasst, die sie umgibt, und die (5) verhindert, dass Flüssigkeit, die darauf tropft, die Erwärmungsgruppe (4) erreicht, **gekennzeichnet durch** eine Trageplatte (6), auf der die Erwärmungsgruppe (4) montiert ist, und die einen Ablauf (7) umfasst, der in Bezug auf die horizontale Ebene geneigt ist, und **durch** den tropfende Flüssigkeit für einen Ablass nach außen umgelenkt wird.

2. Kaffeemaschine (1) nach Anspruch 1, **dadurch gekennzeichnet, dass** die kreisförmige Kante (5) der Wärmplatte (3) diese wie eine Verlängerung umgibt und einstückig mit der Wärmplatte (3) ausgebildet ist.

3. Kaffeemaschine (1) nach Anspruch 1, **dadurch gekennzeichnet, dass** die Wärmplatte (3) auf der Trageplatte (6), die die kreisförmige Kante (5) als Vorsprung von ihrem Umfang umfasst, derart ausgebildet ist, dass sie die Erwärmungsgruppe (4) abdeckt, wobei Flüssigkeit, die von der kreisförmigen Kante (5) herabtropfen, außerhalb des Bereichs fallen, in dem die Erwärmungsgruppe (4) angeordnet ist.

4. Kaffeemaschine (1) nach Anspruch 2, **dadurch gekennzeichnet, dass** die Oberfläche der kreisförmigen Kante (5) der Wärmplatte (3) in Bezug auf die horizontale Ebene geneigt ist.

5. Kaffeemaschine (1) nach Anspruch 1, **dadurch gekennzeichnet, dass** die Trageplatte (6) eine Ablassöffnung (8) umfasst, wodurch Flüssigkeit, die in den Ablass fließt, aus der Kaffeemaschine (1) heraus oder in deren Inneres hinein abgelassen wird.

## Revendications

1. Une machine à café (1) comprenant une chambre de cuisson (2) où le processus de cuisson se réalise, un plateau de chauffage (3) par lequel la chaleur est transmise à la chambre de cuisson (2) et un groupe de chauffage (4) où les connexions électriques et mécaniques du plateau de chauffage (3) sont placées et qui est positionné en dessous du plateau de chauffage (3), dans lequel le plateau de chauffage (3) comprend un bord circulaire (5) autour, lequel bord circulaire (5) empêche les liquides venant du groupe de chauffage (4) de couler sur le plateau, **caractérisée par** un plateau de transport (6) sur lequel le groupe de chauffage (4) est monté et qui comprend un égout (7) incliné par rapport au plan horizontal et par lequel les liquides coulés sont orientés à couler à l'extérieur.

2. Une machine à café (1) selon la Revendication 1, **caractérisée par** un plateau de chauffage (3) qui comprend un bord circulaire (5) comme une extension l'environnant, produit sous forme d'une simple pièce avec le plateau de chauffage (3).

3. Une machine à café (1) selon la Revendication 1, **caractérisée par** un plateau de chauffage (3) qui comprend un bord circulaire (5) comme une projection de la circonférence duquel sur le plateau de transport (6), ayant la fonction de couvrir le groupe de chauffage (4) par lequel les liquides coulant du bord circulaire (5) tombent à l'extérieur de la section où le groupe de chauffage (4) est placé.

4. Une machine à café (1) selon la Revendication 2, **caractérisée par** un plateau de chauffage (3) qui comprend un bord circulaire (5) avec une surface supérieure inclinée par rapport au plan horizontal.

5. Une machine à café (1) selon la Revendication 1, **caractérisée par** un plateau de transport (6) qui comprend un trou de déchargement (8) par lequel les liquides coulant dans l'égout (7) sont évacués à l'extérieur ou à l'intérieur de la machine à café (1).
